# EUROPEAN PATENT SPECIFICATION

(11) **EP 4 368 923 B1**
(45) Date of publication and mention of the grant of the patent: **10.06.2026**
(21) Application number: 22895311.3
(22) Date of filing: 18.10.2022
(51) Int. Cl.: F25D 11/00, F25D 29/00, F25B 1/00, F25D 23/06, B60P 3/20, B60H 1/00

(54) **VEHICLE REFRIGERATOR UNIT, AND VEHICLE**
FAHRZEUGKÜHLSCHRANKEINHEIT UND FAHRZEUG
UNITÉ DE RÉFRIGÉRATEUR DE VÉHICULE ET VÉHICULE

(30) Priority: 16.11.2021 JP 2021186086
(43) Date of publication of application: 15.05.2024
(73) Proprietor: MITSUBISHI HEAVY INDUSTRIES THERMAL SYSTEMS, LTD., Tokyo 100-8332 (JP)
(72) Inventor: JINNO Hiroki, Tokyo 100-8332 (JP); DHARAMSHI Kewal, Tokyo 100-8332 (JP)
(74) Representative: Cabinet Beau de Loménie
(86) International application number: PCT/JP2022/038676
(87) International publication number: WO 2023/090025

(56) References cited:
- JP-A- 2004 166 365
- JP-A- 2016 211 788
- JP-A- 2016 211 788
- JP-A- 2019 031 210
- JP-A- 2019 174 062
- JP-A- H11 136 812
- JP-U- S5 253 397

## Description

### [Technical Field]

The present disclosure relates to a vehicle refrigeration unit and a vehicle. Priority is claimed on Japanese Patent Application No. 2021-186086, filed on November 16, 2021.

### [Background Art]

Some vehicles such as trailers that are towed by trucks and tractors are equipped with containers having transportation refrigerators. Such a transportation refrigerator includes a compressor that compresses a refrigerant, a drive device that drives the compressor, a control device that controls the drive device, and the like.

For example, Patent Literature 1 discloses a configuration equipped with a motor compressor which is disposed in a container (transportation container) and an electrical equipment unit which includes a high voltage-type apparatus driving the motor compressor and a low voltage-type apparatus controlling the driving of the motor compressor. In this configuration, the electrical equipment unit is disposed inside a box body provided on a front surface side of the container. This electrical equipment unit includes a first electrical equipment box which stores the high voltage-type apparatus and a second electrical equipment box which stores the low voltage-type apparatus. The first electrical equipment box and the second electrical equipment box are arranged side by side with a gap in the longitudinal direction.
Patent Literature 2 discloses a refrigerating machine for transportation and trailer.
Patent Literature 3 discloses a cold insulation vehicle refrigerator unit.

### [Citation List]

### [Patent Literature]

[Patent Literature 1] Japanese Unexamined Patent Application, First Publication No. 2016-211788
[Patent Literature 2] JP 2016 211788 A
[Patent Literature 3] JP 2019 174062 A

### [Summary of Invention]

### [Technical Problem]

However, in the configuration shown in Patent Literature 1, the first electrical equipment box storing the high voltage-type apparatus and the second electrical equipment box storing the low voltage-type apparatus are individually provided with a gap therebetween, but all of the first electrical equipment box and the second electrical equipment box are arranged at a low position inside the box body provided on the front surface side of the container. Therefore, when an operator opens the first electrical equipment box by mistake when performing maintenance, there is a possibility that the operator may touch the high voltage-type apparatus which is stored in the first electrical equipment box and through which a high voltage of, for example, 200 V or more flows. Therefore, for example, even when performing maintenance on the low voltage-type apparatus, the operator needs to be a person qualified to handle a high voltage. Further, the operator needs to have gloves, tools, and the like that are compatible with a high voltage. These factors may lead to a decrease in the maintainability of the transportation refrigerator and an increase in maintenance costs.

The present disclosure has been made to solve the above-described problems and an object thereof is to provide a vehicle refrigeration unit and a vehicle capable of performing maintenance easily and safely, improving maintainability, and reducing maintenance costs.

### [Solution to Problem]

In order to solve the above-described problems, a vehicle refrigeration unit according to the present disclosure is defined in claim 1.

A vehicle according to the present disclosure includes the above-described vehicle refrigeration unit and a vehicle body which is disposed in front of the container and has a cabin allowing an occupant to board.

### [Advantageous Effects of Invention]

According to the vehicle refrigeration unit and the vehicle of the present disclosure, it is possible to perform maintenance easily and safely, improve maintainability, and reduce maintenance costs.

### [Brief Description of Drawings]

FIG. 1 is a diagram showing a schematic configuration of a vehicle equipped with a vehicle refrigeration unit according to an embodiment of the present disclosure.
FIG. 2 is a block diagram showing a functional configuration of a high voltage-type apparatus and a low voltage-type apparatus of the vehicle refrigeration unit.
FIG. 3 is a perspective view showing a configuration of a unit body of the vehicle refrigeration unit.
FIG. 4 is a perspective view showing a frame, a high voltage-type storage box, and a low voltage-type storage box of the unit body.
FIG. 5 is a perspective view showing a state in which a high voltage-type lid of the high voltage-type storage box and a low voltage-type lid of the low voltage-type storage box are opened.
FIG. 6 is a cross-sectional view showing a state when performing maintenance on the low voltage-type apparatus.
FIG. 7 is a block diagram showing a state in which the application of a DC high voltage is cut off in the high voltage-type apparatus and the low voltage-type apparatus of the vehicle refrigeration unit.
FIG. 8 is a diagram showing a schematic configuration of a vehicle equipped with a vehicle refrigeration unit according to a modified example of the embodiment of the present disclosure.

### [Description of Embodiments]

Hereinafter, a mode for carrying out a vehicle refrigeration unit and a vehicle according to the present disclosure will be described with reference to the accompanying drawings. However, the present disclosure is not limited to this embodiment.

### (Configuration of vehicle)

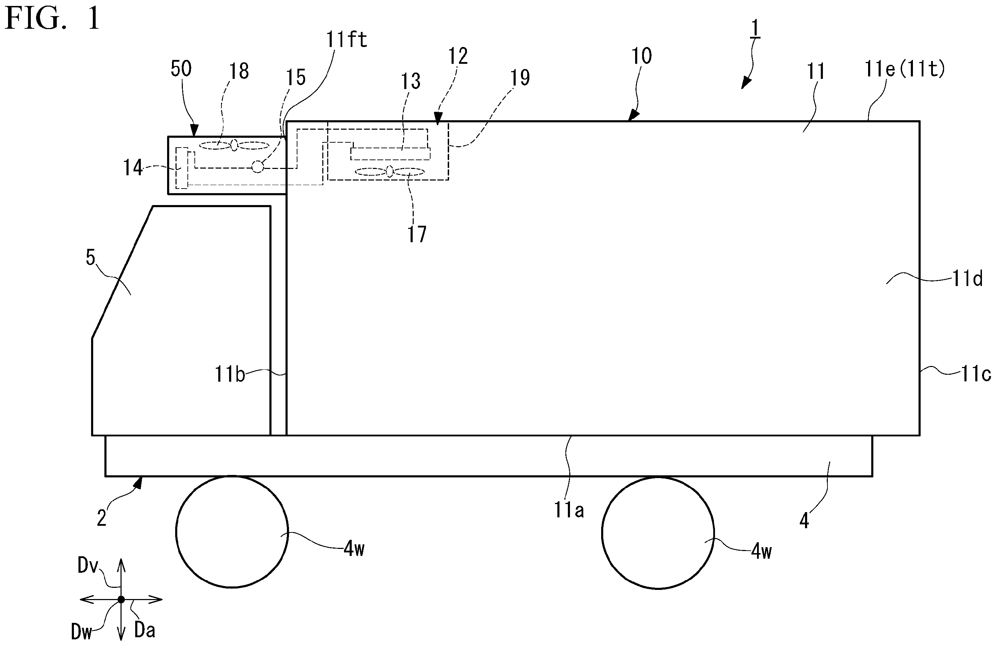

As shown in FIG. 1, a vehicle 1 includes a vehicle body 2 and a vehicle refrigeration unit 10. In the following, the traveling direction of the vehicle 1 is referred to as the longitudinal direction Da, the direction orthogonal to the longitudinal direction Da and connecting the left and right sides in the traveling direction when viewed from the occupant of the vehicle 1 is referred to as the width direction Dw, and the direction orthogonal to the longitudinal direction Da and the width direction Dw is referred to as the vertical direction Dv.

The vehicle body 2 of this embodiment is, for example, a truck. In this case, the vehicle body 2 includes a chassis 4 and a cabin 5 allowing an occupant to board. Furthermore, the vehicle body 2 may be, for example, a trailer. In this case, the vehicle body 2 includes a tractor which allows the vehicle refrigeration unit 10 to be mounted thereon and the cabin 5 which tows the tractor and allows the occupant to board.

The chassis 4 extends in the longitudinal direction Da. The chassis 4 includes a plurality of wheels 4w. The chassis 4 includes a traveling engine (not shown) which allows the vehicle body 2 to travel. The engine is mounted on the front part of the chassis 4 in the longitudinal direction Da.

The cabin 5 is disposed above the engine in the front part of the chassis 4. The vehicle refrigeration unit 10 is mounted on the rear part of the chassis 4 in the longitudinal direction Da. The cabin 5 is disposed in front of the vehicle refrigeration unit 10.

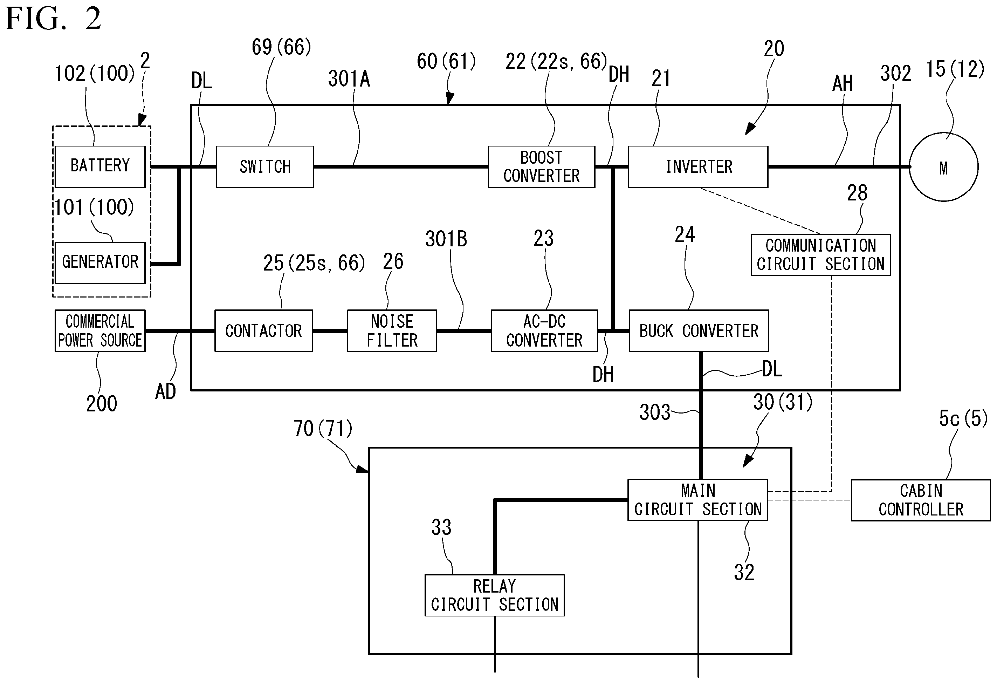

As shown in FIG. 2, the vehicle body 2 includes a generator 101 which is driven by the engine and a battery 102. The generator 101 is disposed in the vicinity of the engine. The generator 101 generates electric power by being rotated by the engine. The generator 101 is a low-voltage DC power source 100 and generates a DC low voltage DL of, for example, 27 V. The battery 102 is provided in the rear part of the chassis 4. The battery 102 is a low-voltage DC power source 100 and outputs a DC low voltage DL of, for example, 27 V.

As shown in FIG. 1, the vehicle refrigeration unit 10 mainly includes a container 11, a refrigeration cycle 12, and a unit body 50.

The container 11 is mounted on the chassis 4. The container 11 is disposed behind the cabin 5. The container 11 is formed into a hollow rectangular parallelepiped shape extending in the longitudinal direction Da. The container 11 can store cargo that needs to be cooled or frozen. The container 11 includes a bottom plate 11a, a front wall 11b, a rear wall 11c, a pair of side walls 11d, and an upper plate 11e. The bottom plate 11a forms a bottom surface of the container 11. The bottom plate 11a has a rectangular shape in plan view with the long side extending in the longitudinal direction Da and is fixed on the chassis 4. The front wall 11b rises upward from the front edge of the bottom plate 11a. The rear wall 11c rises upward from the rear edge of the bottom plate 11a. The pair of side walls 11d respectively rise upward from both ends of the bottom plate 11a in the width direction Dw. The upper plate 11e forms an upper surface 11t of the container 11. The upper plate 11e covers a space surrounded by the front wall 11b, the rear wall 11c, and the pair of side walls 11d from above.

The refrigeration cycle 12 includes a motor compressor 15, an indoor heat exchanger 13, an outdoor heat exchanger 14, an indoor heat exchange fan 17, an outdoor heat exchange fan 18, an expansion valve (not shown), an accumulator (not shown), and a receiver (not shown).

The motor compressor 15, the outdoor heat exchanger 14, and the outdoor heat exchange fan 18 are built in the unit body 50 to be described later. The motor compressor 15 compresses a refrigerant. The outdoor heat exchanger 14 is disposed outside the container 11. The outdoor heat exchanger 14 cools the refrigerant supplied from the motor compressor 15 by heat exchange with outside air. The outdoor heat exchange fan 18 is disposed in the vicinity of the outdoor heat exchanger 14. The outdoor heat exchange fan 18 sends outside air to the outdoor heat exchanger 14. The refrigerant cooled by the outdoor heat exchanger 14 is supplied to the expansion valve (not shown) via the receiver (not shown). The expansion valve expands (depressurizes) the refrigerant supplied from the receiver.

The indoor heat exchanger 13 is provided in an indoor unit 19 provided inside the container 11. The indoor heat exchanger 13 cools the atmosphere inside the container 11 by exchanging heat between the refrigerant expanded by the expansion valve and the (indoor) atmosphere inside the container 11. The indoor heat exchange fan 17 is provided in the indoor unit 19. The indoor heat exchange fan 17 is disposed in the vicinity of the indoor heat exchanger 13. The indoor heat exchange fan 17 cools the inside of the container 11 by sending air cooled by the indoor heat exchanger 13 inside the container 11.

The accumulator (not shown) receives the refrigerant having passed through the indoor heat exchanger 13. The accumulator supplies the received refrigerant to the motor compressor 15.

As shown in FIG. 2, the vehicle refrigeration unit 10 includes a high voltage-type apparatus 20 and a low voltage-type apparatus 30 in order to operate the refrigeration cycle 12.

The high voltage-type apparatus 20 drives the motor compressor 15. The high voltage-type apparatus 20 mainly includes an inverter 21, a boost converter 22, an AC-DC converter 23, and a buck converter 24. The boost converter 22 boosts the DC low voltage DL supplied from the battery 102 and the generator 101 serving as the low-voltage DC power source 100 provided in the vehicle body 2 to a DC high voltage DH of, for example, 270 V.

The AC-DC converter 23 converts an AC high voltage AD of, for example, 230 V supplied from a commercial power source 200 outside the vehicle 1 into a DC high voltage DH of, for example, 270 V.

The inverter 21 converts the DC high voltage DH supplied from the boost converter 22 or the AC-DC converter 23 into a three-phase AC high voltage AH of, for example, 270 V. The inverter 21 drives the motor compressor 15 by supplying the converted three-phase AC high voltage AH to the motor compressor 15.

The buck converter 24 converts the DC high voltage DH supplied from the boost converter 22 or the AC-DC converter 23 into the DC low voltage DL of, for example, 27 V. The buck converter 24 supplies the converted DC low voltage DL to the low voltage-type apparatus 30.

The low voltage-type apparatus 30 is driven by the DC low voltage DL of, for example, 27 V lower than the DC high voltage DH used for the high voltage-type apparatus 20. The low voltage-type apparatus 30 includes a controller 31 which controls the operation of the refrigeration cycle 12. The controller 31 includes a main circuit section 32 and a relay circuit section 33.

The main circuit section 32 is operated by the DC low voltage DL supplied from the buck converter 24. The main circuit section 32 executes a process for controlling the operation of the inverter 21 on the basis of a pre-stored program. The main circuit section 32 receives an input signal of the set temperature inside the container 11 from a cabin controller 5c provided in the cabin 5. The main circuit section 32 outputs a control signal for operating the inverter 21 so that the temperature inside the container 11 is maintained at the set temperature on the basis of detection signals from temperature sensors (not shown) respectively provided inside the container 11 and outside the container 11. The control signal output from the main circuit section 32 is transmitted to the inverter 21 via a communication circuit section 28 provided in the high voltage-type apparatus 20.

The relay circuit section 33 is electrically connected to the main circuit section 32. The relay circuit section 33 controls the operations of the indoor heat exchange fan 17 and the outdoor heat exchange fan 18 on the basis of the signal output from the main circuit section 32.

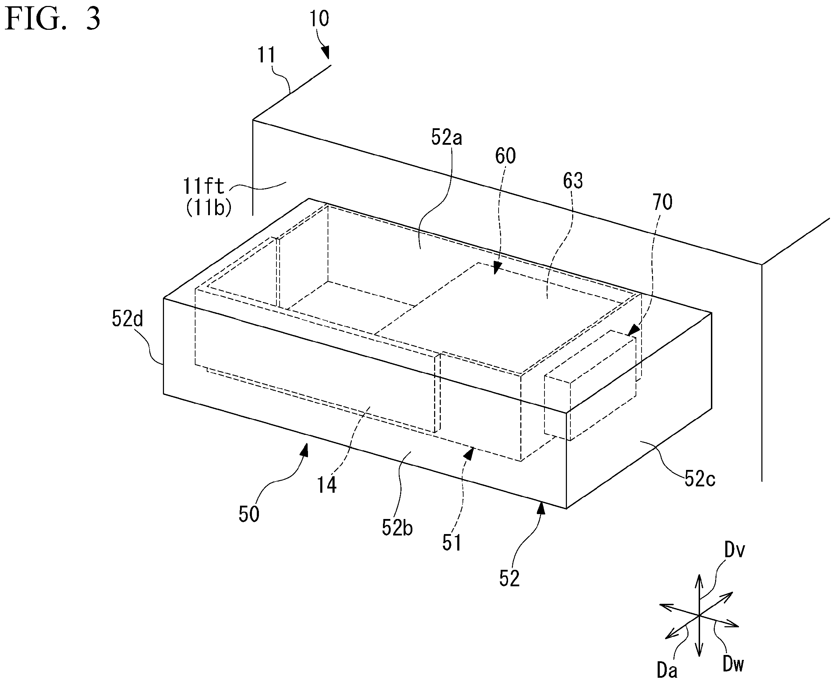

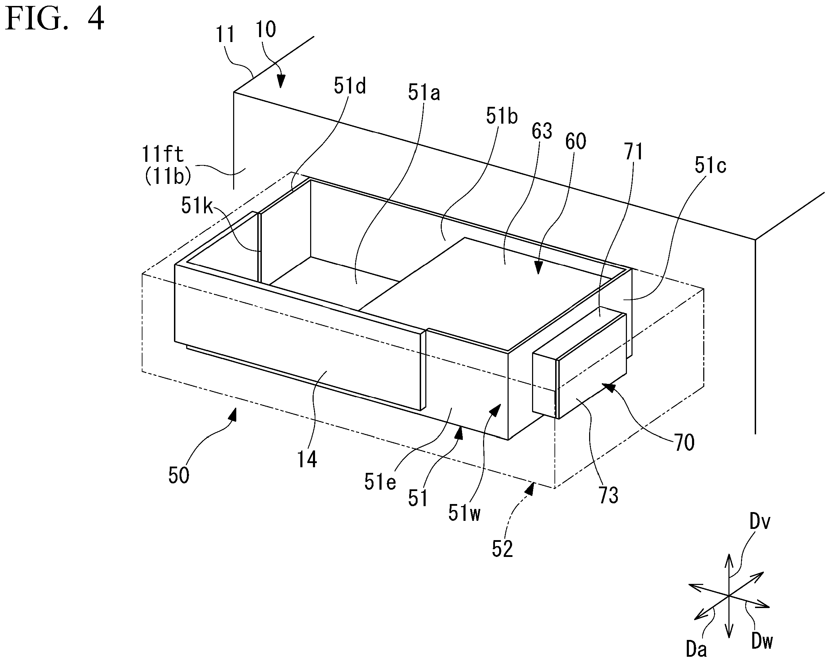

As shown in FIG. 1, the unit body 50 is installed outside the container 11. The unit body 50 is installed in a front upper portion 11ft of the front wall 11b of the container 11. The unit body 50 is disposed above the cabin 5. The unit body 50 has a box shape as a whole. As shown in FIGS. 3 and 4, the unit body 50 includes a frame 51 and a decorative panel 52.

As shown in FIG. 4, the frame 51 is fixed to the front wall 11b of the container 11. The frame 51 integrally includes a bottom plate 51a and a peripheral wall portion 51w. The peripheral wall portion 51w includes a rear plate 51b, side plates 51c and 51d, and a front plate 51e. The bottom plate 51a is formed in a rectangular shape that is long in the width direction Dw when viewed from above. The rear plate 51b rises upward from the rear edge of the bottom plate 51a. The rear plate 51b is fixed to the front wall 11b of the container 11. The side plates 51c and 51d rise upward from both side edges of the bottom plate 51a in the width direction Dw. The front plate 51e rises upward from the front edge of the bottom plate 51a. A notch 51k is formed in a part of the side plate 51d and the front plate 51e constituting the peripheral wall portion 51w.

As shown in FIG. 3, the decorative panel 52 integrally includes an upper panel 52a, a front panel 52b, and side panels 52c and 52d. The upper panel 52a is formed in a rectangular shape that is long in the width direction Dw when viewed from above. The front panel 52b extends downward from the front edge of the upper panel 52a. The side panels 52c and 52d extend downward from both sides of the upper panel 52a in the width direction Dw. The decorative panel 52 is removably attached to the frame 51 via a stay (not shown) or the like. The upper panel 52a is formed to cover the entire frame 51 from above while the decorative panel 52 is attached to the frame 51. The front panel 52b and the side panels 52c and 52d are arranged with a gap in the horizontal direction with respect to the frame 51 while the decorative panel 52 is attached to the frame 51.

The motor compressor 15, the outdoor heat exchanger 14, the outdoor heat exchange fan 18, the expansion valve (not shown), the accumulator (not shown), and the receiver (not shown) constituting a part of the refrigeration cycle 12 shown in FIG. 1 are attached to the frame 51. The motor compressor 15, the expansion valve (not shown), the accumulator (not shown), and the receiver (not shown) are stored inside the peripheral wall portion 51w of the frame 51. As shown in FIG. 4, the outdoor heat exchanger 14 is provided to cover the notch 51k and constitutes a part of the peripheral wall portion 51w.

The upper panel 52a of the decorative panel 52 is provided with a fan opening (not shown) which sends air inside the unit body 50 to the outside by the rotation of the outdoor heat exchange fan 18.

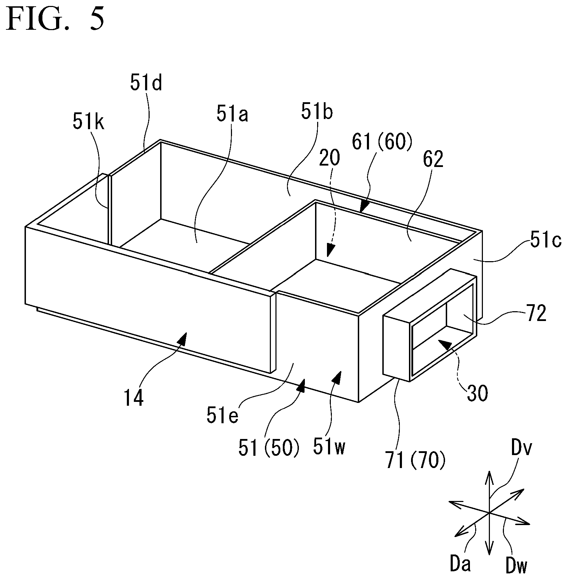

As shown in FIGS. 4 to 6, a high voltage-type storage box 60 and a low voltage-type storage box 70 are arranged inside the unit body 50.

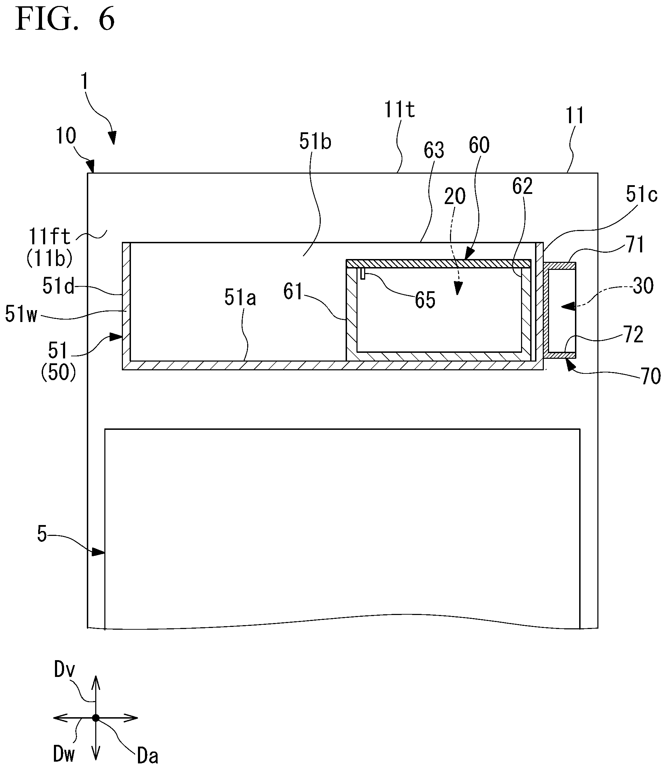

The high voltage-type storage box 60 is stored inside the peripheral wall portion 51w of the frame 51. In other words, the frame 51 is provided to surround the high voltage-type storage box 60 when viewed from above. The high voltage-type storage box 60 is disposed inside the frame 51 toward the side plate 51c on one side in the width direction Dw. The high voltage-type storage box 60 includes a high voltage-type box body 61 and a high voltage-type lid 63. The high voltage-type box body 61 is formed in a bottomed box shape having an upper opening 62 opening upward. As shown in FIG. 2, the inverter 21, the boost converter 22, the AC-DC converter 23, and the buck converter 24 constituting the high voltage-type apparatus 20 are stored inside the high voltage-type box body 61. As shown in FIG. 6, the high voltage-type lid 63 closes the upper opening 62 in an openable and closable manner.

As shown in FIGS. 4 to 6, the low voltage-type storage box 70 is installed outside the peripheral wall portion 51w of the frame 51. The low voltage-type storage box 70 includes a low voltage-type box body 71 and a low voltage-type lid 73. The low voltage-type box body 71 has a side opening 72 that opens toward one side (outward) in the width direction Dw. As shown in FIG. 2, a circuit board and the like constituting the main circuit section 32 and the relay circuit section 33 constituting the low voltage-type apparatus 30 are stored inside the low voltage-type box body 71. As shown in FIG. 4, the low voltage-type lid 73 closes the side opening 72 in an openable and closable manner.

As shown in FIGS. 3 and 4, the frame 51, the high voltage-type storage box 60 disposed inside the frame 51, and the low voltage-type storage box 70 attached to the outside of the frame 51 are covered with the decorative panel 52.

As shown in FIG. 2, one ends of power source side wirings 301A and 301B are respectively connected to the boost converter 22 and the AC-DC converter 23 inside the high voltage-type storage box 60. The power source side wirings 301A and 301B are led out to the outside of the high voltage-type storage box 60 and are connected to the generator 101, the battery 102, and the commercial power source 200. A contactor 25 and a noise filter 26 are provided in the power source side wiring 301B connected to the commercial power source 200.

Further, one end of the output side wiring 302 is connected to the inverter 21. The other end of the output side wiring 302 is led out to the outside of the high voltage-type storage box 60 and is connected to the motor compressor 15 inside the unit body 50. One end of a power supply wiring 303 for supplying electric power to the controller 31 is connected to the buck converter 24. The other end of the power supply wiring 303 is led out to the outside of the high voltage-type storage box 60 and is connected to the main circuit section 32 inside the low voltage-type storage box 70.

Further, the high voltage-type storage box 60 includes a detection mechanism 65 (see FIG. 6) and a cutoff means 66. The detection mechanism 65 includes a sensor such as a limit switch that detects that the high voltage-type lid 63 is opened. The cutoff means 66 cuts off the application of the DC high voltage DH in the high voltage-type apparatus 20 when the sensor of the detection mechanism 65 detects that the high voltage-type lid 63 is opened.

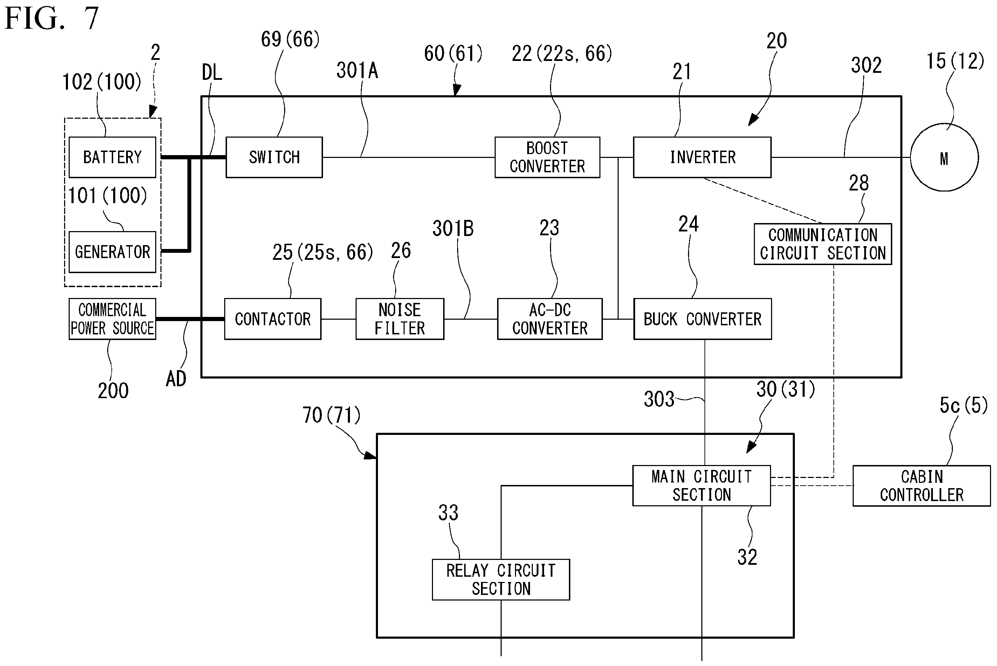

In this embodiment, as the cutoff means 66, a switch 69 is provided in the power source side wiring 301A that connects the generator 101, the battery 102, and the boost converter 22 inside the high voltage-type storage box 60. As shown in FIG. 7, the switch 69 is automatically opened when the sensor of the detection mechanism 65 detects that the high voltage-type lid 63 is opened and cuts off the supply of the DC low voltage DL to the boost converter 22 via the power source side wiring 301A. In the power source side wirings 301A and 301B of FIG. 7, the thick line portion indicates a portion where the current of the DC low voltage DL flows and the thin line portion indicates a portion where no current flows. Accordingly, no current flows on the downstream side (the side of the boost converter 22) in relation to the switch 69. Further, the connection terminal connected to the power source side wiring 301A on the upstream side of the switch 69 (the side of the generator 101 and the battery 102) is preferably covered with a cover such as a finger protector. Accordingly, it is possible to prevent an operator from carelessly touching a portion where the DC low voltage DL flows on the upstream side of the switch 69.

Further, a cutoff mechanism 25s of the contactor 25 provided in the power source side wiring 301B connected to the commercial power source 200 is provided as the cutoff means 66. The cutoff mechanism 25s of the contactor 25 cuts off the supply of the voltage to the downstream side (the side of the AC-DC converter 23) when the sensor of the detection mechanism 65 detects that the high voltage-type lid 63 is opened.

A cutoff mechanism 22s built in the boost converter 22 can be used as the cutoff means 66. The cutoff mechanism 22s of the boost converter 22 cuts off the supply of the voltage to the downstream side (the side of the motor compressor 15) when the sensor of the detection mechanism 65 detects that the high voltage-type lid 63 is opened.

In such a vehicle refrigeration unit 10, for example, when performing maintenance such as updating a program on the main circuit section 32 of the low voltage-type apparatus 30, the decorative panel 52 of the unit body 50 is first separated to expose the low voltage-type lid 73 of the low voltage-type storage box 70 as shown in FIG. 4. Subsequently, as shown in FIG. 6, the low voltage-type lid 73 is opened to access the inside of the low voltage-type box body 71 and to perform predetermined maintenance work.

At this time, the high voltage-type lid 63 of the high voltage-type storage box 80 is left in a closed state. Accordingly, careless touching of the high voltage-type apparatus 20 inside the high voltage-type storage box 80 is suppressed when performing maintenance on parts other than the high voltage-type storage box 80.

### (Operation and effect)

In the vehicle refrigeration unit 10 and the vehicle 1 of the above-described configuration, the high voltage-type storage box 60 is stored in the unit body 50 installed in the front upper portion 11ft of the container 11. Accordingly, the operator cannot access the high voltage-type storage box 60 storing the high voltage-type apparatus 20 unless the operator climbs to a high position of the container 11. Thus, it is possible to prevent the operator from carelessly touching the high voltage-type apparatus 20 to which the DC high voltage DH is applied when performing maintenance on parts other than the high voltage-type apparatus 20. Therefore, when performing maintenance on parts other than the high voltage-type apparatus 20, the operator is not limited to a person qualified to handle a high voltage. Further, it is possible to eliminate the need for special equipment and tools compatible with a high voltage. As a result, it is possible to perform maintenance easily and safely, improve maintainability, and reduce maintenance costs.

Further, the high voltage-type storage box 60 is surrounded by the frame 51. Thus, in order to access the high voltage-type storage box 60, it is necessary to remove the decorative panel 52 of the unit body 50 located at a high position of the container 11 and to access the frame 51 from above. From this reason, it is possible to suppress the operator from carelessly touching the high voltage-type apparatus 20 to which the DC high voltage DH is applied when performing maintenance on parts other than the high voltage-type apparatus 20.

Further, the high voltage-type storage box 60 includes the high voltage-type box body 61 having the upper opening 62 opening upward and the high voltage-type lid 63 which closes the upper opening 62 in an openable and closable manner.

Accordingly, in order to access the high voltage-type apparatus 20 inside the high voltage-type storage box 60, it is necessary to open the high voltage-type lid 63 that closes the upper opening 62 of the high voltage-type box body 61. Thus, it is possible to more effectively suppress the operator from carelessly touching the high voltage-type apparatus 20 to which the DC high voltage DH is applied when performing maintenance on parts other than the high voltage-type apparatus 20.

Further, the low voltage-type storage box 70 is installed outside the frame 51 and is covered with the decorative panel 52.

Accordingly, since the low voltage-type storage box 70 is installed outside the frame 51 surrounding the high voltage-type storage box 60, it is possible to suppress the high voltage-type apparatus 20 inside the high voltage-type storage box 60 surrounded by the frame 51 from being carelessly touched when performing maintenance on the low voltage-type apparatus 30 stored in the low voltage-type storage box 70. Thus, it is possible to more effectively suppress the operator from carelessly touching the high voltage-type apparatus 20 to which the DC high voltage DH is applied when performing maintenance on parts other than the high voltage-type apparatus 20.

Further, the low voltage-type storage box 70 includes the low voltage-type box body 71 which has the side opening 72 opening laterally and the low voltage-type lid 73 which closes the side opening 72 in an openable and closable manner. Accordingly, in order to access the low voltage-type apparatus 30 inside the low voltage-type storage box 70, the low voltage-type lid 73 which closes the side opening 72 of the low voltage-type box body 71 may be opened after removing the decorative panel 52 of the unit body 50. Since the side opening 72 opens laterally, it is easy to access the low voltage-type apparatus 30 inside the low voltage-type storage box 70 and it is possible to improve maintainability.

Further, the high voltage-type storage box 60 includes the cutoff means 66 which cuts off the application of the DC high voltage DH in the high voltage-type apparatus 20 when the detection mechanism 65 detects that the high voltage-type lid 63 is opened.

Accordingly, when the detection mechanism 65 detects that the high voltage-type lid 63 of the high voltage-type storage box 60 is opened, the cutoff means 66 cuts off the application of the DC high voltage DH in the high voltage-type apparatus 20. Accordingly, it is possible to more effectively suppress the operator from carelessly touching the high voltage-type apparatus 20 to which the DC high voltage DH is applied.

### (Other embodiments)

Although the embodiment of the present disclosure has been described above in detail with reference to the drawings, the specific configuration is not limited to this embodiment, and includes design changes within the scope of the gist of the present disclosure.

For example, the low voltage-type storage box 70 is provided in the unit body 50 in which the high voltage-type storage box 60 is disposed, but the low voltage-type storage box 70 may be disposed, for example, at an appropriate location outside the unit body 50.

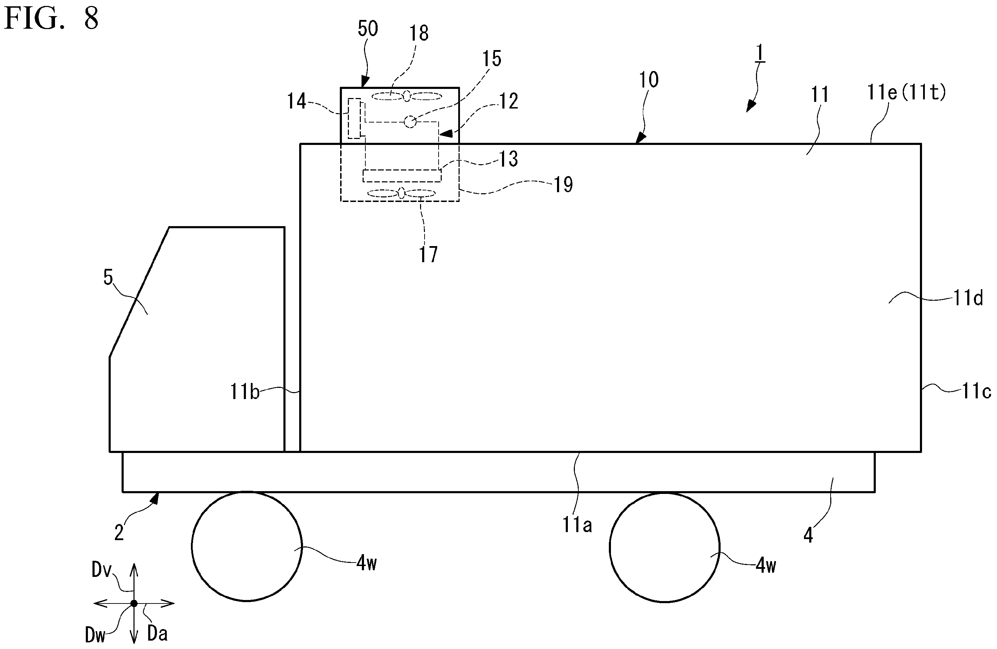

Further, in the above-described embodiment, the unit body 50 is disposed on the front upper portion 11ft of the container 11, but the present disclosure is not limited thereto. As shown in FIG. 8, the unit body 50 may be installed in the upper surface 11t of the container 11.

### <Appendix>

The vehicle refrigeration unit 10 and the vehicle 1 described in the embodiment are understood, for example, as below.
(1) The vehicle refrigeration unit 10 according to a first aspect includes: the box-shaped container 11 which is mountable on the vehicle body 2; the refrigeration cycle 12 which includes at least the indoor heat exchanger 13 disposed inside the container 11 and the motor compressor 15 compressing the refrigerant supplied to the indoor heat exchanger 13; the high voltage-type apparatus 20 which includes the boost converter 22 boosting the DC low voltage DL supplied from the low-voltage DC power source 100 provided on the side of the vehicle body 2 to the DC high voltage DH and the inverter 21 electrically connected to the boost converter 22 and converting the DC high voltage DH into the AC high voltage AH; the low voltage-type apparatus 30 which is driven by a voltage lower than the high voltage-type apparatus 20 and includes the controller 31 controlling the operation of the inverter 21; the high voltage-type storage box 60 which stores the high voltage-type apparatus 20; the low voltage-type storage box 70 which stores the low voltage-type apparatus 30; and the box-shaped unit body 50 which is installed in the front upper portion 11ft of the container 11 or the upper surface 11t of the container 11 and stores at least the high voltage-type storage box 60.
   In the vehicle refrigeration unit 10, at least the high voltage-type storage box 60 is stored in the unit body 50 installed in the front upper portion 11ft of the container 11 or the upper surface 11t of the container 11. Accordingly, the operator cannot access the high voltage-type storage box 60 storing the high voltage-type apparatus 20 unless the operator climbs to a high position of the container 11. Thus, it is possible to prevent the operator from carelessly touching the high voltage-type apparatus 20 to which the DC high voltage DH is applied when performing maintenance on parts other than the high voltage-type apparatus 20. Therefore, when performing maintenance on parts other than the high voltage-type apparatus 20, the operator is not limited to a person qualified to handle a high voltage. Further, it is possible to eliminate the need for special equipment and tools compatible with a high voltage. As a result, it is possible to perform maintenance easily and safely, improve maintainability, and reduce maintenance costs.
(2) In the invention, the unit body 50 includes the frame 51 which is formed to surround the high voltage-type storage box 60 when viewed from above and the decorative panel 52 which covers the frame 51 and the high voltage-type storage box 60.
   Accordingly, the high voltage-type storage box 60 is surrounded by the frame 51. Thus, in order to access the high voltage-type storage box 60, it is necessary to remove the decorative panel 52 of the unit body 50 located at a high position of the container 11 and to access the frame 51 from above. From this reason, it is possible to suppress the operator from carelessly touching the high voltage-type apparatus 20 to which the DC high voltage DH is applied when performing maintenance on parts other than the high voltage-type apparatus 20.
(3) In the invention, the high voltage-type storage box 60 includes the high voltage-type box body 61 which has the upper opening 62 opening upward and stores the high voltage-type apparatus 20 therein and the high voltage-type lid 63 which closes the upper opening 62 in an openable and closable manner.
   Accordingly, in order to access the high voltage-type apparatus 20 inside the high voltage-type storage box 60, it is necessary to open the high voltage-type lid 63 that closes the upper opening 62 of the high voltage-type box body 61. Thus, it is possible to more effectively suppress the operator from carelessly touching the high voltage-type apparatus 20 to which the DC high voltage DH is applied when performing maintenance on parts other than the high voltage-type apparatus 20.
(4) The vehicle refrigeration unit 10 according to a fourth aspect is the vehicle refrigeration unit 10 of (2) or (3), wherein the low voltage-type storage box 70 is installed outside the frame 51 and is covered with the decorative panel 52.
   Accordingly, since the low voltage-type storage box 70 is installed outside the frame 51 surrounding the high voltage-type storage box 60, it is possible to suppress the high voltage-type apparatus 20 inside the high voltage-type storage box 60 surrounded by the frame 51 from being carelessly touched by the operator when performing maintenance on the low voltage-type apparatus 30 stored in the low voltage-type storage box 70. Thus, it is possible to more effectively suppress the operator from carelessly touching the high voltage-type apparatus 20 to which the DC high voltage DH is applied when performing maintenance on parts other than the high voltage-type apparatus 20.
(5) The vehicle refrigeration unit 10 according to a fifth aspect is the vehicle refrigeration unit 10 of (4), wherein the low voltage-type storage box 70 includes the low voltage-type box body 71 which has the side opening 72 opening laterally and stores the low voltage-type apparatus 30 therein and the low voltage-type lid 73 which closes the side opening 72 in an openable and closable manner.
   Accordingly, in order to access the low voltage-type apparatus 30 inside the low voltage-type storage box 70, the low voltage-type lid 73 which closes the side opening 72 of the low voltage-type box body 71 may be opened after removing the decorative panel 52 of the unit body 50. Since the side opening 72 opens laterally, it is easy to access the low voltage-type apparatus 30 inside the low voltage-type storage box 70 and it is possible to improve maintainability.
(6) The vehicle refrigeration unit 10 according to a sixth aspect is the vehicle refrigeration unit 10 of any one of (1) to (5), wherein the high voltage-type storage box 60 includes the detection mechanism 65 which detects that the high voltage-type lid 63 is opened and the cutoff means 66 which cuts off the application of the DC high voltage DH in the high voltage-type apparatus 20 when the detection mechanism 65 detects that the high voltage-type lid 63 is opened.
   Accordingly, when the detection mechanism 65 detects that the high voltage-type lid 63 of the high voltage-type storage box 60 is opened, the cutoff means 66 cuts off the application of the DC high voltage DH in the high voltage-type apparatus 20. Accordingly, it is possible to more effectively suppress the operator from carelessly touching the high voltage-type apparatus 20 to which the DC high voltage DH is applied.
   Examples of the cutoff means 66 include a switch or contactor which is provided in a circuit connected to the boost converter 22 and a cutoff mechanism which is built into an electrical component to which the DC high voltage DH is applied.
(7) The vehicle 1 according to a seventh aspect includes: the vehicle refrigeration unit 10 according to any one of (1) to (6); and the vehicle body 2 which is disposed in front of the container 11 and has the cabin allowing the occupant to board.
   Accordingly, in the vehicle 1 equipped with the vehicle refrigeration unit 10, it is possible to suppress the operator from carelessly touching the high voltage-type apparatus 20 to which the DC high voltage DH is applied when performing maintenance on parts other than the high voltage-type apparatus 20. As a result, it is possible to perform maintenance easily and safely, improve maintainability, and reduce maintenance costs.

### [Industrial Applicability]

According to the aspects of the present disclosure, it is possible to perform maintenance easily and safely, improve maintainability, and reduce maintenance costs.

### [Reference Signs List]

1 Vehicle
2 Vehicle body
4 Chassis
4w Wheel
5 Cabin
5c Cabin controller
10 Vehicle refrigeration unit
11 Container
11a Bottom plate
11b Front wall
11c Rear wall
11d Side wall
11e Upper plate
11ft Front upper portion
11t Upper surface
12 Refrigeration cycle
13 Indoor heat exchanger
14 Outdoor heat exchanger
15 Motor compressor
17 Indoor heat exchange fan
18 Outdoor heat exchange fan
19 Indoor unit
20 High voltage-type apparatus
21 Inverter
22 Boost converter
22s Cutoff mechanism
23 AC-DC converter
24 Buck converter
25 Contactor
25s Cutoff mechanism
26 Noise filter
28 Communication circuit section
30 Low voltage-type apparatus
31 Controller
32 Main circuit section
33 Relay circuit section
50 Unit body
51 Frame
51a Bottom plate
51b Rear plate
51c Side plate
51d Side plate
51e Front plate
51k Notch
51w Peripheral wall portion
52 Decorative panel
52a Upper panel
52b Front panel
52c Side panel
52d Side panel
60 High voltage-type storage box
61 High voltage-type box body
62 Upper opening
63 High voltage-type lid
65 Detection mechanism
66 Cutoff means
69 Switch
70 Low voltage-type storage box
71 Low voltage-type box body
72 Side opening
73 Low voltage-type lid
80 High voltage-type storage box
100 Low-voltage DC power source
101 Generator
102 Battery
200 Commercial power source
301A Power source side wiring
301B Power source side wiring
302 Output side wiring
303 Power supply wiring
AD AC high voltage
AH Three-phase AC high voltage
DH DC high voltage
DL DC low voltage
Da Direction
Dv Vertical direction
Dw Width direction

## Claims

1. A vehicle refrigeration unit (10) comprising:
a box-shaped container (11) which is mountable on a vehicle body (2);
a refrigeration cycle (12) which includes at least an indoor heat exchanger (13) disposed inside the container and a motor compressor (15) compressing a refrigerant supplied to the indoor heat exchanger;
a high voltage-type apparatus (20) which includes a boost converter (22) boosting a DC low voltage supplied from a low-voltage DC power source provided in the vehicle body side to a DC high voltage and an inverter electrically connected to the boost converter and converting the DC high voltage into an AC high voltage;
a low voltage-type apparatus (30) which is driven by a voltage lower than the high voltage-type apparatus and includes a controller (31) controlling the operation of the inverter;
a high voltage-type storage box (60) which stores the high voltage-type apparatus; and
a low voltage-type storage box (70) which stores the low voltage-type apparatus;
the vehicle refrigeration unit being **characterized in that** it comprises:
a box-shaped unit body (50) which is installed in a front upper portion of the container or an upper surface of the container and stores at least the high voltage-type storage box,
wherein the unit body (50) includes a frame (51) which is fixed to the vehicle body (2) and is formed to surround the high voltage-type storage box (60) when viewed from above and a decorative panel (52) which covers the frame and the high voltage-type storage box, and
wherein the high voltage-type storage box (60) includes a high voltage-type box body (61) which has an upper opening (62) that opens upward and stores the high voltage-type apparatus (20) therein and a high voltage-type lid (63) which closes the upper opening in an openable and closable manner.

2. The vehicle refrigeration unit according to claim 1,
wherein the low voltage-type storage box (70) is installed outside the frame and is covered with the decorative panel.

3. The vehicle refrigeration unit according to claim 1 or 2,
wherein the low voltage-type storage box (70) includes a low voltage-type box body (71) which has a side opening (72) that opens laterally and stores the low voltage-type apparatus therein and a low voltage-type lid (73) which closes the side opening in an openable and closable manner.

4. The vehicle refrigeration unit according to claim any one of claims 1 to 3,
wherein the high voltage-type storage box (60) includes a detection mechanism (65) which detects that the high voltage-type lid (63) is opened and a cutoff means (66) which cuts off the application of the DC high voltage in the high voltage-type apparatus when the detection mechanism detects that the high voltage-type lid is opened.

5. A vehicle (1) comprising:
the vehicle refrigeration unit (10) according to any one of claims 1 to 4; and
a vehicle body (2) which is disposed in front of the container (11) and has a cabin (5) allowing an occupant to board.

## Patentansprüche

1. Fahrzeugkühleinheit (10), umfassend:
einen kastenförmigen Behälter (11), der an einer Fahrzeugkarosserie (2) montierbar ist;
einen Kältekreislauf (12), der mindestens einen Innenraumwärmetauscher (13) innerhalb des Behälters angeordnet ist, und einen Motorverdichter (15), der ein Kältemittel verdichtet, das dem Innenraumwärmetauscher zugeführt wird, umfasst;
eine Hochspannungs-Vorrichtung (20), umfassend einen Aufwärtswandler (22), der Gleichstrom-Niederspannung, die von einer Niederspannungs-Gleichstromquelle zugeführt wird, die auf der Seite der Fahrzeugkarosserie bereitgestellt wird, auf eine Gleichstrom-Hochspannung hochsetzt, und einen Wechselrichter, der elektrisch mit dem Aufwärtswandler verbunden ist, der die Gleichstrom-Hochspannung in eine Wechselstrom-Hochspannung umwandelt;
eine Niederspannungs-Vorrichtung (30), die mit einer niedrigeren Spannung als die Hochspannungs-Vorrichtung betrieben wird und eine Steuerung (31) beinhaltet, die den Betrieb des Wechselrichters steuert;
einen Hochspannungs-Aufbewahrungskasten (60), der die Hochspannungs-Vorrichtung aufbewahrt; und
einen Niederspannungs-Aufbewahrungskasten (70), der die Niederspannungs-Vorrichtung aufbewahrt;
wobei die Fahrzeugkühleinheit **dadurch gekennzeichnet ist, dass** sie Folgendes umfasst:
einen kastenförmigen Einheitskörper (50), der in einem vorderen oberen Abschnitt des Behälters oder auf einer oberen Fläche des Behälters installiert ist und mindestens den Hochspannungs-Aufbewahrungskasten aufbewahrt,
wobei der Einheitskörper (50) einen Rahmen (51), der an der Fahrzeugkarosserie (2) befestigt ist und gebildet ist, um den Hochspannungs-Aufbewahrungskasten (60) in Draufsicht zu umgeben, und eine Dekorplatte (52), die den Rahmen und den Hochspannungs-Aufbewahrungskasten abdeckt, beinhaltet, und
wobei der Hochspannungs-Aufbewahrungskasten (60) einen Hochspannungs-Kastenkörper (61), der eine nach oben offene obere Öffnung (62) aufweist und die Hochspannungs-Vorrichtung (20) darin aufbewahrt, und einen Hochspannungs-Deckel (63), der die obere Öffnung auf öffnungsfähige und schließbare Weise verschließt, beinhaltet.

2. Fahrzeugkühleinheit nach Anspruch 1,
wobei der Niederspannungs-Aufbewahrungskasten (70) außerhalb des Rahmens installiert ist und von der Dekorplatte abgedeckt ist.

3. Fahrzeugkühleinheit nach Anspruch 1 oder 2,
wobei der Niederspannungs-Aufbewahrungskasten (70) einen Niederspannungs-Kastenkörper (71), der eine seitliche Öffnung (72) aufweist, die sich seitlich öffnet, und die Niederspannungs-Vorrichtung darin aufbewahrt, und einen Niederspannungs-Deckel (73), der die seitliche Öffnung auf öffnungsfähige und schließbare Weise verschließt, beinhaltet.

4. Die Fahrzeugkühleinheit nach einem der Ansprüche 1 bis 3,
wobei der Hochspannungs-Aufbewahrungskasten (60) einen Erfassungsmechanismus (65), der erfasst, dass der Hochspannungs-Deckel (63) geöffnet ist, und eine Abschalteinrichtung (66), die das Anlegen der Gleichstrom-Hochspannung in der Hochspannungs-Vorrichtung abschaltet, wenn der Erfassungsmechanismus erfasst, dass der Hochspannungs-Deckel geöffnet ist, beinhaltet.

5. Fahrzeug (1), umfassend:
die Fahrzeugkühleinheit (10) nach einem der Ansprüche 1 bis 4; und
eine Fahrzeugkarosserie (2), die vor dem Behälter (11) angeordnet ist und eine Kabine (5) aufweist, die ein Einsteigen eines Insassen zulässt.

## Revendications

1. Unité de réfrigération de véhicule (10) comprenant :
un conteneur en forme de boîtier (11) qui peut être monté sur une carrosserie de véhicule (2) ;
un cycle de réfrigération (12) qui comprend au moins un échangeur de chaleur intérieur (13) disposé à l'intérieur du conteneur et un compresseur à moteur (15) qui comprime un réfrigérant fourni à l'échangeur de chaleur intérieur ;
un appareil à haute tension (20) qui comprend un convertisseur élévateur (22) qui élève une tension continue faible fournie par une source d'alimentation CC à basse tension prévue côté carrosserie du véhicule en une tension continue élevée, et un onduleur relié électriquement au convertisseur élévateur et qui convertit la tension continue élevée en une tension alternative élevée ;
un appareil à basse tension (30) qui est entraîné par une tension inférieure à celle de l'appareil à haute tension et qui comprend un contrôleur (31) qui pilote le fonctionnement de l'onduleur ;
un boîtier de stockage type haute tension (60) qui stocke l'appareil à haute tension ; et
un boîtier de stockage type basse tension (70) qui stocke l'appareil à basse tension ;
l'unité de réfrigération de véhicule étant **caractérisée en ce qu'**elle comprend :
un corps d'unité en forme de boîtier (50) qui est installé dans une partie supérieure avant du conteneur ou sur une surface supérieure du conteneur et qui stocke au moins le boîtier de stockage type haute tension, le corps d'unité (50) comprenant un cadre (51) qui est fixé sur la carrosserie de véhicule (2) et est formé pour entourer le boîtier de stockage type haute tension (60) lorsqu'il est vu de dessus, et un panneau décoratif (52) qui recouvre le cadre et le boîtier de stockage type haute tension, et
le boîtier de stockage type haute tension (60) comprenant un corps de boîtier type haute tension (61) qui possède une ouverture supérieure (62) qui s'ouvre vers le haut et qui stocke l'appareil type haute tension (20) à l'intérieur de celui-ci, et un couvercle type haute tension (63) qui ferme l'ouverture supérieure de manière ouvrable et fermable.

2. Unité de réfrigération de véhicule selon la revendication 1,
dans laquelle le boîtier de stockage type basse tension (70) est installé à l'extérieur du cadre et est recouvert par le panneau décoratif.

3. Unité de réfrigération de véhicule selon la revendication 1 ou 2,
dans laquelle le boîtier de stockage type basse tension (70) comprend un corps de boîtier type basse tension (71) qui possède une ouverture latérale (72) qui s'ouvre latéralement et stocke l'appareil à basse tension à l'intérieur de celui-ci, et un couvercle type basse tension (73) qui ferme l'ouverture latérale de manière ouvrable et fermable.

4. Unité de réfrigération de véhicule selon l'une quelconque des revendications 1 à 3,
dans laquelle le boîtier de stockage type haute tension (60) comprend un mécanisme de détection (65) qui détecte que le couvercle type haute tension (63) est ouvert et un moyen de coupure (66) qui coupe l'application de la tension continue élevée dans l'appareil à haute tension lorsque le mécanisme de détection détecte que le couvercle type haute tension est ouvert.

5. Véhicule (1) comprenant :
l'unité de réfrigération de véhicule (10) selon l'une quelconque des revendications 1 à 4 ; et
une carrosserie de véhicule (2) qui est disposée devant le conteneur (11) et qui possède une cabine (5) qui permet à un occupant de monter à bord.
